# FASCICULE DE BREVET EUROPEEN

(11) **EP 0 362 096 B1**
(45) Date de publication et mention de la délivrance du brevet: **07.04.1993**
(21) Numéro de dépôt: 89440100.9
(22) Date de dépôt: 28.09.1989
(51) Int. Cl.: B60P 3/12

(54) **Véhicule porteur comprenant un plateau de chargement télescopique**
Fahrzeugtransporter mit einer teleskopierbaren Ladefläche
Vehicle carrier with telescopic loading floor

(30) Priorité: 28.09.1988 FR 8812703
(43) Date de publication de la demande: 04.04.1990
(73) Titulaire: JIGE LOHR WRECKERS, S.A., F-55800 Revigny-sur-Ornain (FR)
(72) Inventeur: Georges, Jean, F-55260 Pierrefitte sur Air (FR); Binot, Patrick, F-54520 Laxou (FR)
(74) Mandataire: Metz, Paul

(56) Documents cités:
- EP-A- 0 061 959
- EP-A- 0 087 752
- FR-A- 2 185 581
- FR-A- 2 486 467
- FR-A- 2 546 828

## Description

La présente invention concerne un véhicule porteur, comprenant un plateau de chargement télescopique articulé sur un châssis support, des moyens de commande et de déplacement du plateau et un équipement de tractage/levage articulé monté sous la partie arrière du plateau de chargement télescopique articulé.

Il est déjà connu dans l'état de la technique des véhicules porteurs comprenant un plateau mobile et des systèmes de grues, treuils, flèches, etc... pour le levage de véhicules.

Le plateau mobile est articulé à l'arrière du véhicule porteur sur un axe, un vérin soulève l'avant du plateau mobile qui pivote sur l'axe en position inclinée, le plateau coulisse sur un châssis et descend jusqu'au sol de manière à former un angle entre le plateau et le sol de 15° environ.

Les flèches utilisées sont rangées en position inclinée en passant à travers le plateau grâce à une trappe pratiquée dans le plateau, en position préhension elles sont inclinées vers le sol, en position remorquage elles sont positionnées à une hauteur fixe et en position grue elles reprennent la même position que lorsqu'elles sont rangées c'est-à-dire qu'elles doivent traverser le plateau et dépassent à l'arrière du véhicule. Ces flèches sont montées sur une chaise liée au plateau, la chaise a une garde au sol de 350 mm, la flèche peut être déplacée en rotation, elle tourne sur une chappe et elle est actionnée par un vérin, elle parcourt un angle de 75° ce qui lui permet d'atteindre une inclinaison par rapport au sol de 45° mais grâce à une trappe dans le plateau.

Le brevet français n° 72 19613 décrit une flèche pour camion de dépannage. Cette flèche est articulée sur une jambe de force elle-même articulée et elle est articulée à son autre extrémité à un chariot mobile de telle sorte que cette flèche peut être déplacée d'une position horizontale de non utilisation à une position inclinée d'utilisation.

Le brevet français n° 80 15184 (FR-A-2 486 467) décrit un véhicule porteur à plateau mobile et à système télescopique de levage/tractage selon le préambule de la présente revendication indépendante 1. Le plateau de chargement est susceptible de coulisser par rapport à un bâti support, le véhicule comprend un équipement de tractage/levage articulé sur une structure fixée à la partie inférieure du bâti, le dispositif de tractage/levage comprend au moins deux éléments télescopiques escamotables dont l'élément de base est monté articulé sur la structure support, l'élément télescopique extérieur ayant son extrémité agencée pour recevoir de façon amovible un équipement de levage/tractage prédéterminé, le dispositif de tractage/levage étant basculable entre une position basse escamotée sous le bâti support et une position levée avec au moins ladite extrémité faisant saillie vers le haut par rapport au plateau. Le véhicule comprend des moyens de liaison mécaniques entre le dispositif de tractage/levage et le plateau pour commander, par le déplacement du plateau, le basculement du dispositif de tractage/levage depuis une position escamotée sous le plateau vers une position levée.

Le modèle britannique enregistré sous le n° 10 38163 qui représente un véhicule porteur à plateau, le plateau pouvant coulisser sur un châssis lié en rotation au bâti du véhicule le plateau étant lié en rotation par sa partie avant au châssis, cela lui permet de descendre jusqu'au sol à une très faible inclinaison, le plateau est manoeuvré par un système complexe , de câbles, de poulies de renvois, de treuils et de mouflages.

Comme on peut le constater, l'état actuel de la technique ne résoud pas certains problèmes. Un angle de 15° est trop important pour charger certains véhicules qui ont une garde au sol très basse, la seule solution résiderait dans l'utilisation d'un plateau correspondant au modèle britannique cité, mais son système de poulies de renvoi fonctionne par à-coups, tombe souvent en panne, il est peu fiable et compliqué, de plus il est très difficile à fabriquer industriellement à cause de sa complexité et du nombre d'opérations de montage qu'il nécessite. Dans l'état de la technique, il n'existe pas de flèche qui peuvent se monter sur ou sous les plateaux sans effectuer d'onéreux aménagements du plateau de plus ces aménagements étant essentiellement des trappes, il est nécessaire de manoeuvrer cette dernière pour relever la flèche, ce qui prend du temps, hors lors d'un carambolage, le temps nécessaire au dégagement de la chaussée doit être le plus bref possible. Dans l'état de la technique, la flèche en position rangée dépasse du plateau ce qui entraîne un porte-à-faux qui augmente les contraintes surtout dans la position grue, comme la flèche se déplace en rotation autour de son axe dans la position basse elle est inclinée pour atteindre le sol et les véhicules avec une garde au sol basse ne peuvent pas être remorqués. En position remorquage, la hauteur de la flèche est fixe et elle ne peut donc pas être réglée pour s'adapter au véhicule remorqué.

La chaise sur laquelle est montée la flèche a une forme de L, une extrémité du L étant soudée sous le plateau la garde au sol du véhicule porteur descend à 350 mm ce qui réduit considérablement ses possibilités de manoeuvres.

Selon la présente invention ce but est atteint, dans un véhicule porteur d'un type comme décrit ci-dessus, grâce aux caractéristiques définies dans la partie caractérisante de la revendication 1.

La plate-forme peut être guidée et déplacée sur le bâti au moyen d'au moins une crémaillère et d'au moins un pignon; le pignon et la plate-forme peuvent être déplacés sur la crémaillère au moyen d'au moins un moteur hydraulique où ils peuvent être maintenus immobiles à n'importe quelle position au moyen d'un frein hydraulique par manque de pression.

L'équipement de tractage/levage articulé, du véhicule porteur peut comprendre au moins un bras et un panier articulé sur le bras au moyen d'un arbre et en ce que le panier pouvant se replier de façon à être parallèle au bras en position rangée de l'équipement de tractage/levage et est également parallèle au plateau. Ils se terminent tous les deux au même niveau l'un au-dessus de l'autre. L'équipement de tractage/levage peut se poser au sol avec un angle très faible, en position remorquage il est réglable à une hauteur modulable sans modifier son assiette, en position grue il est déployé à un angle d'au moins 45° par rapport au sol, à l'arrière du véhicule, au delà du plateau.

L'équipement comprend un amplificateur angulaire qui peut être mécanique ou hydraulique ou autre, cet amplificateur angulaire peut être réalisé au moyen de pignons et de crémaillères ou de pignons et de satellites ou de compas ou d'une bielle en forme de crochet articulée à une extrémité à un vérin, à l'autre extrémité à une bielle rectiligne, cette dernière pouvant être articulée sur le bras du dispositif de levage ou cet équipement de tractage/levage comprend une came. L'équipement peut être articulé au moyen d'au moins deux bielles entraînées par au moins deux vérins dont l'un peut être tourillonné sur une troisième bielle. L'une des deux bielles du dispositif de tractage/levage est rétractable au moyen d'une lumière au niveau de l'articulation et une autre bielle est munie également d'une lumière au niveau de l'articulation et est de forme à arrêter un crochet qui oblige les bielles à coulisser le long de la lumière. L'une des articulations de la bielle peut rester fixe par rapport au châssis mais est libre en rotation, et l'autre articulation pouvant parcourir pour une bielle un cercle pour l'autre une ellipse.

La présente invention a pour but de pallier tous les inconvénients cités ci-dessus et d'autres encore en étant constitué d'un plateau coulissant qui coulisse grâce à un coulisseau, le plateau étant articulé il peut se déployer complètement quand il est incliné et à ce moment il est presque horizontal son angle par rapport au sol ne dépasse pas 5°, ce plateau est entraîné par un pignon qui engrène une crémaillère, le pignon est entraîné par un moteur hydraulique. Le pignon est lié à un frein hydraulique par manque de pression, ce qui fait que le système est maintenu en position quand le moteur s'arrête, ce système est très fiable, régulier, son déplacement est doux. Les véhicules accidentés produisent une pollution importante, ferrailles, cailloux, etc... Le dispositif pignon-crémaillère avec un module 6 détruit ces pollutions, si une pollution n'est pas détruite et se coince entre deux dents la régulation hydraulique arrête le pignon.

Le dispositif de levage et de tractage se range entièrement sous le plateau, son arbre d'extrémité arrive à la hauteur de l'extrémité du plateau si bien qu'il fait barre anti-encastrement. La flèche n'a plus de porte-à-faux en position rangée. Tout le dispositif descend jusqu'au sol, il reste vertical et peut prendre des véhicules avec garde au sol très faible la flèche n'a pas plus de 10 mm de gîte/3 m de longueur.

La flèche peut se soulever à l'horizontale à la hauteur désirée par rapport au sol et peut s'adapter au véhicule remorqué.

La flèche peut être mise en position grue à l'arrière du plateau, il n'est plus nécessaire d'y pratiquer une trappe et l'on gagne le temps de manoeuvrer de la trappe et son coût de fabrication avec toutes les contraintes qu'elle impose.

Ce mouvement de la flèche est obtenu grâce à un amplificateur d'angle. Il peut être mécanique , hydraulique ou autre.

D'autres traits de l'invention apparaîtront dans la suite de la description en référence aux dessins, cette description se limitera à certains modes d'exécutions de l'invention, on pourra construire d'autres réalisations sans sortir de l'invention.
La figure 1 représente une vue de côté d'un véhicule porteur selon l'état de la technique;
La figure 2 représente une vue de droite du véhicule porteur selon l'invention
La figure 3 représente une vue en perspective du dispositif de déplacement de la plate-forme.
Les figures 4 à 7 représentent en vue de droite les différentes positions d'une flèche selon l'état de la technique.
Les figures 8 à 11 représentent l'équipement de tractage/levage selon l'invention.
La figure 12 représente un amplificateur d'angle selon l'invention en position rangée.
La figure 13 représente l'amplificateur d'angle de la figure 12 quand le bras est en position grue.
La figure 14 représente le déplacement dans l'espace de l'amplificateur d'angle.
Les figures 15 à 20 représentent des variantes d'amplificateur d'angle selon l'invention.

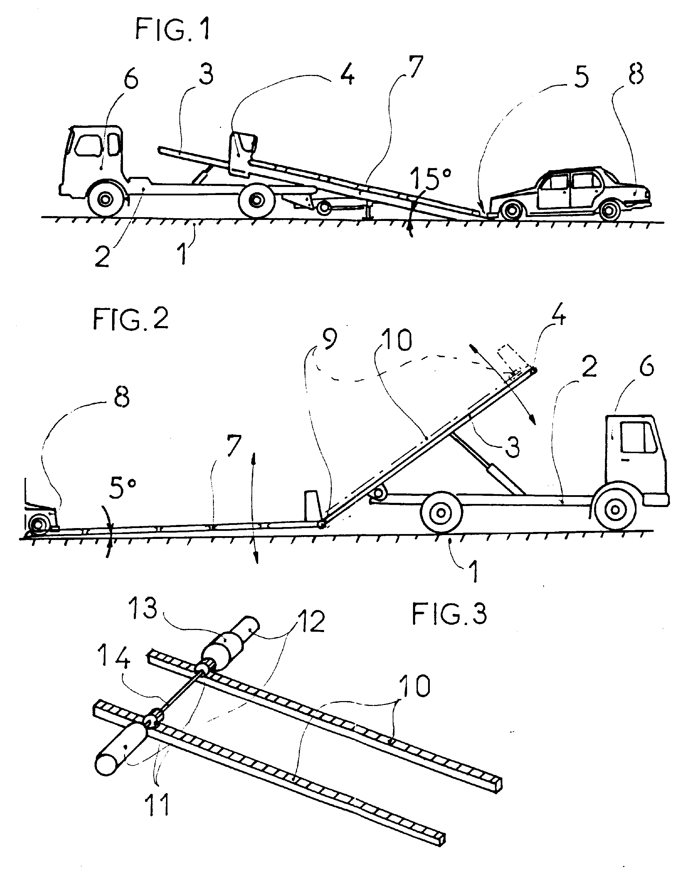

La figure 1 représente une vue de côté du dispositif selon l'état de la technique d'un véhicule porteur 6 comprenant un châssis support 2 à l'arrière duquel est lié en rotation un plateau 4, ce dernier constitué d'un bâti 3 sur lequel coulisse une plate-forme 7 quand le bâti est incliné, la plate-forme 7 coulisse jusqu'au sol 1 pour former avec ce dernier un angle de 15°, le véhicule porteur est sensé charger des véhicules 8 mais si ces derniers ont une garde au sol 5 basse, ils heurtent le plateau.

La figure 2 représente une vue de droite d'un véhicule porteur 6 selon l'invention en position de chargement, il comprend un châssis support 2 à l'arrière duquel est lié en rotation un plateau 4 constitué d'un bâti 3 sur lequel une plate-forme 7 au moyen d'un coulisseau 9 qui est entraîné par un système pignon-crémaillère 10, la plate-forme 7 est articulée en rotation sur le coulisseau 9. Grâce à cette articulation, le coulisseau peut descendre jusqu'au sol 1 à ce moment, la plate-forme 7 est posée sur le sol 1 comme représenté, elle ne forme plus qu'aun angle de 5° maximum avec le sol 1 et on peut charger les véhicules 8 avec garde au sol très basse. Le coulisseau est représenté en trait mixte à l'autre extrémité de sa course en haut du bâti 3′.

La figure 3 représente une vue en perspective du dispositif permettant de déplacer la plate-forme 7 par rapport au bâti 3, il est constitué d'une crémaillère fixée sur le bâti 3 sur laquelle engrène un pignon 11 qui se déplace sur toute la longueur de la crémaillère 10, le pignon est lié à un axe 14 entraîné en rotation par un moteur 12 le dispositif est équipé d'un frein 13 par manque de pression.

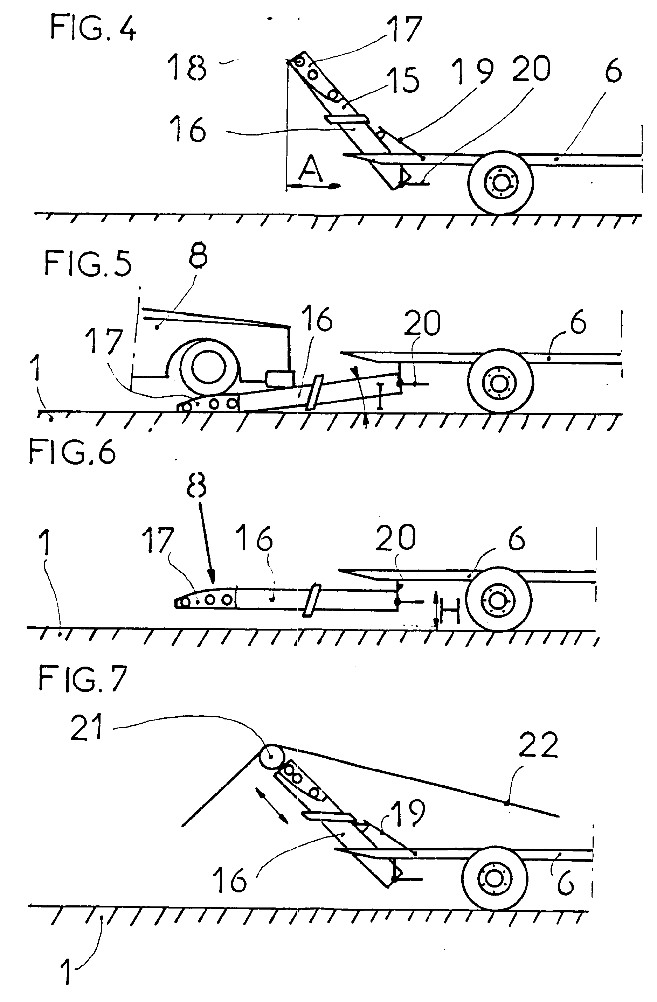

Les figures 4 à 7 représentent une vue de droite d'une flèche 5 c'est-à-dire une variété d'équipement de tractage/levage de l'état de la technique dans les quatre positions nécessaires pour l'utiliser, elle est montée sur un véhicule 6 et elle est consttituée d'un ou plusieurs bras 16 articulés à une chaise 20 liés au véhicule 6, elle comprend un panier 17 articulé lié en rotation sur le bras 16.

La figure 4 représente la flèche en position rangée, elle traverse le plateau du véhicule 6 dans lequel il a été nécessaire de pratiquer une trappe 19. Dans cette position, la flèche dépasse en porte-à-faux d'une longueur A du véhicule.

La figure 5 représente la flèche en position de préhension, le panier 17 est posé sur le sol 1, le véhicule 8 est monté sur le panier, mais vient en butée sur le bras 16 et ne peut pas être positionné correctement, le bras 16 est incliné par rapport au sol d'un angle I qui représente son inclinaison car il est articulé sur la chaise 20 liée au véhicule 6.

La figure 6 représente la flèche en position remorquage, elle est maintenue à une hauteur fixe H par rappel au sol 1, le panier 17 est déplié, il contient le véhicule 8 montré à la figure 5 mais non représenté ici, le bras 16 est parallèle au sol 1 et au plateau du véhicule porteur 6.

La figure 7 représente la flèche en position grue, il est de nouveau nécessaire d'ouvrir la trappe 19 du plateau du véhicule porteur 6, il y a de nouveau un porte-à-faux. Une poulie 21 est fixée à l'extrémité du bras 16. La poulie 21 guide un câble 22 fixé à l'avant du plateau du véhicule porteur 6.

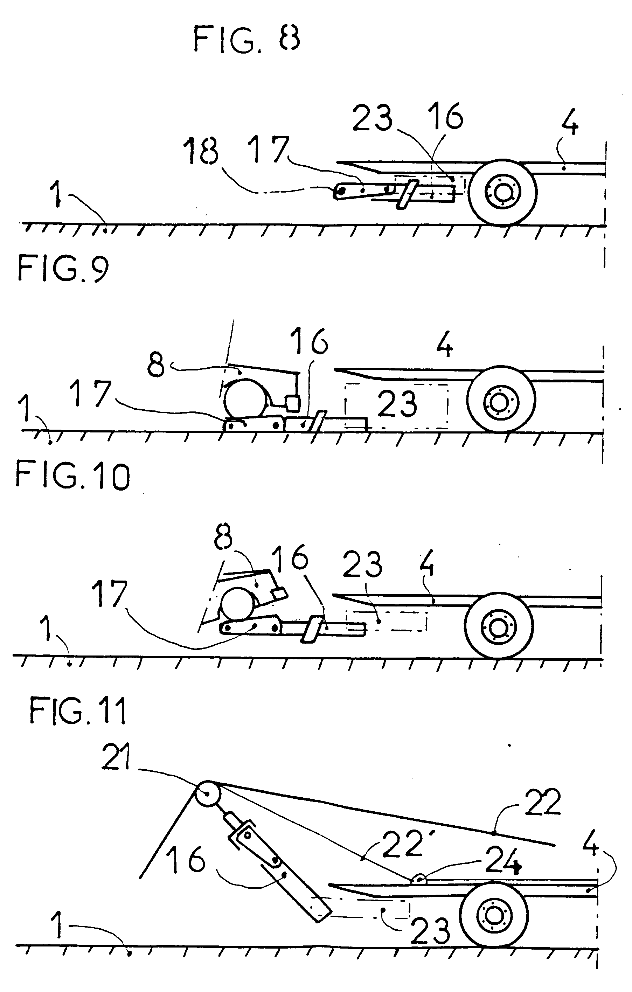

Les figures 8 à 11 représentent l'équipement de tractage/levage 15 articulé selon l'invention dans les positions plus avantageuses qu'il prend. Il est articulé au plateau 14 du véhicule porteur au moyen d'au moins un amplificateur angulaire 23, il est constitué d'un ou plusieurs bras 16, d'un panier 17 pour prendre les véhicules 8. Le panier 17 est articulé sur le bras au moyen d'un axe 18.

La figure 8 représente l'équipement de tractage/levage 15 en position rangée, il n'y a pas de porte-à-faux. L'extrémité de l'équipement, la barre 18 arrive au niveau de l'extrémité du plateau 4, ce qui fait que la barre 18 sert de barre anti-encastrement, l'équipement est entièrement rangé sous le plateau 4.

La figure 9 représente l'équipement de tractage/levage en position préhension, les bras 16 et 17 sont posés sur le sol 1 ce qui permet de prendre des véhicules 8 avec une garde au sol très basse.

La figure 10 représente l'équipement de tractage/levage en position remorquage, le panier 17 et le bras 16 restent parallèles au sol 1 et peuvent être placés à n'importe quelle hauteur, on peut également les incliner par rapport au sol 1.

La figure 11 représente l'équipement en position grue, le bras est incliné vers le haut et dépasse la hauteur du plateau 4 mais n'a plus besoin de le traverser. Le câble 22 est fixé à l'avant du plateau 4 ou le câble 22′ est guidé au moyen d'un renvoi 24 à l'arrière du plateau 4 ce qui n'était pas possible avant la présente invention, car il y avait une trappe à l'arrière du plateau.

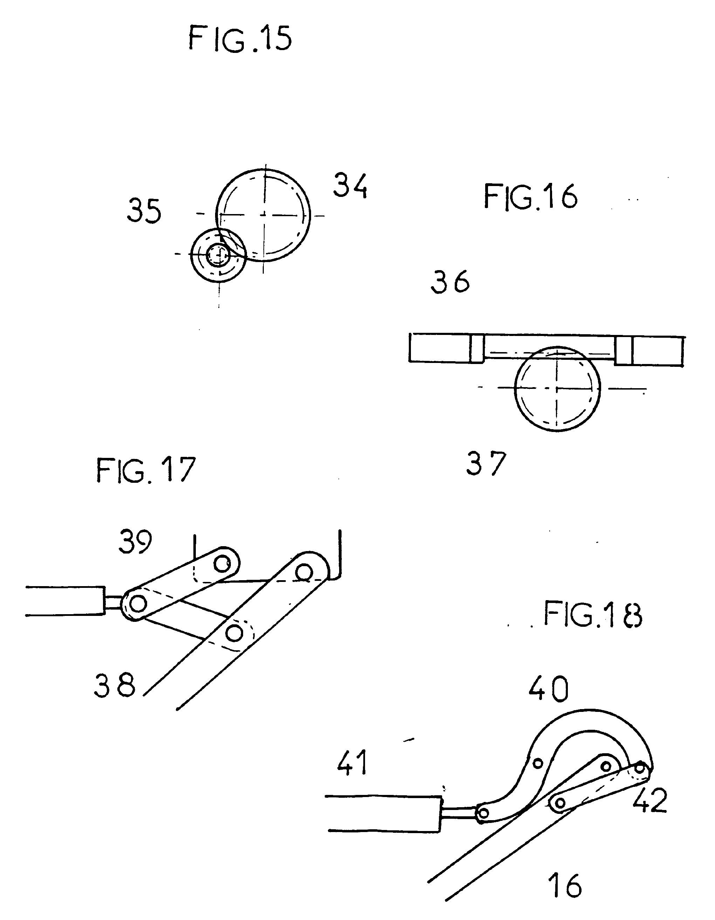

Les figures 12 et 13 représentent un mode de réalisation de la liaison entre l'arbre 16 et le plateau 4. Cette liaison fait amplificateur d'angle, elle est constituée d'une chaise 26 soudée au bâti et a une jambe de force 25′. Sur la chaise 26 sont montés un vérin 30, des bielles 27, 28 et 29 libres en rotation et fixées à des endroits différents de la chaise 26 pour former des articulations. L'arbre 16 est articulé aux extrémités des bielles 28 et 29. L'arbre 16 est déplacé par la bielle 28 elle-même déplacée par un vérin 31 tourillonné sur la bielle 27, déplacée par le vérin 30.

La figure 12 représente l'amplificateur d'angle en position rangée. L'arbre 16 est positionné sous le plateau 4 en parallèle avec ce dernier. Les deux vérins sont en position rentrée et se retrouvent l'un à côté de l'autre.

La figure 13 représente l'amplificateur d'angle quand le bras 16 est en position grue. Le vérin 30 articulé sur la chaise 26 pousse la bielle 27 qui déplace le vérin 31 qui est tourillonné sur la bielle 27. Le vérin 31 pousse la bielle 28 articulée au bras 16. Le bras 16 est articulé aux bielles 28 et 29 qui ont une longueur différente ce qui l'entraîne à se déplacer dans l'espace selon une ellipse.

La figure 14 représente le déplacement dans l'espace d'une articulation de bielle 28.

L'articulation entre la bielle 28 et le bras 16 décrit un cercle 32 dans l'espace.

Le bras 16 décrit une ellipse 33 dans l'espace.

Différentes positions de la bielle 28 sont représentées en traits fins continus.

La figure 15 représente un amplificateur angulaire selon une variante d'exécution, il est constitué d'un pignon 34 qui engrène avec un satellite 35, lié au bras 16, les phases du déplacement du bras 16 entraîné par cet amplificateur sont représentées en figure 14.

La figure 16 représente un amplificateur angulaire selon une variante d'exécution, il est constitué d'une crémaillère 36 et d'un pignon 37, lié au bras 16, les phases du déplacement du bras 16 entraîné par cet amplificateur sont représentées en figure 14.

La figure 17 représente un amplificateur angulaire selon une variante d'exécution, il est constitué d'un compas 38 entraîné par un vérin 39. Le compas est lié au bras 16. Les phases du déplacement du bras 16 entraîné par cet amplificateur sont représentées en figure 14.

La figure 18 représente un amplificateur angulaire selon une variante d'exécution, il est constitué d'une bielle 40 en forme de crochet articulé à une extrémité à un vérin 41 à l'autre extrémité à une bielle rectiligne, cette dernière articulée au bras 16. Les phases du déplacement du bras 16 entraîné par cet amplificateur sont représentées en figure 14.

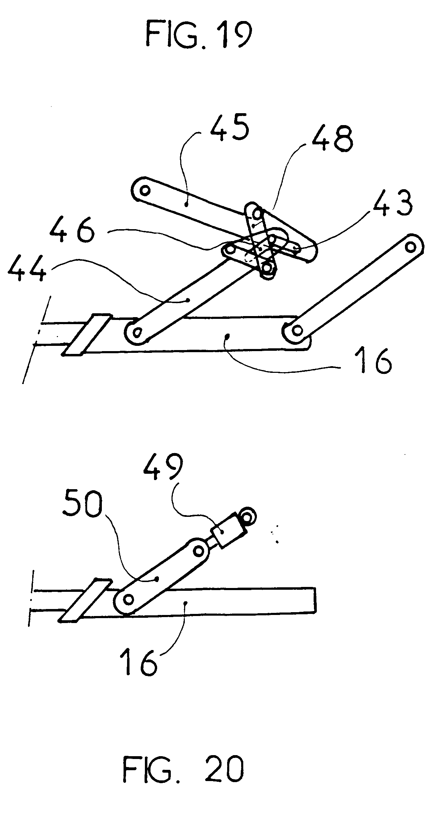

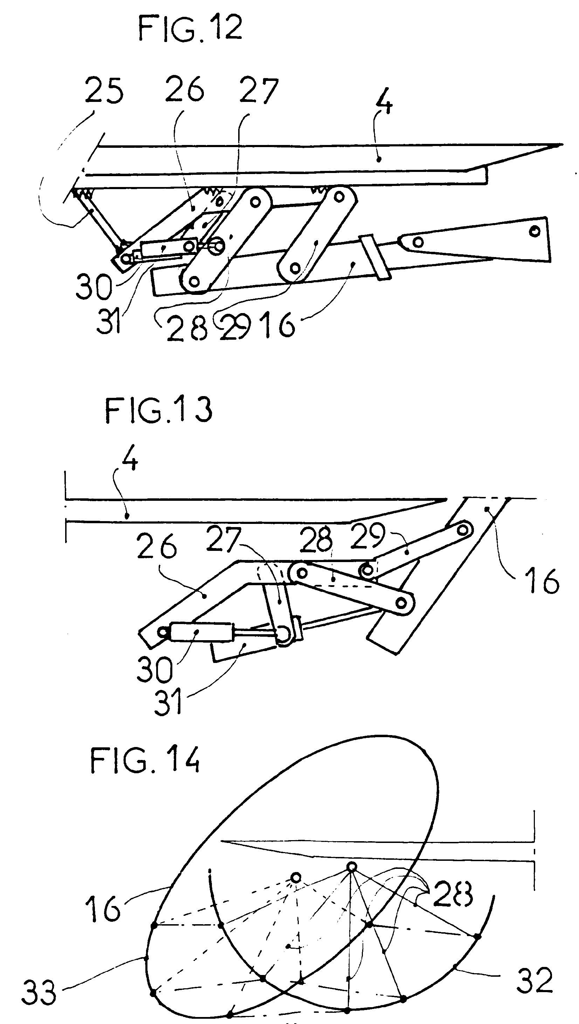

La figure 19 représente un amplificateur angulaire selon une variante d'exécution, il est constitué de deux bielles 45 rétractables au moyen d'une lumière 43 au niveau de l'articulation et d'une autre bielle 44 munie également d'une lumière 46 au niveau de l'articulation et de forme à arrêter un crochet 48 qui oblige les bielles à coulisser le long de la lumière. La bielle 44 est articulée sur le bras 16. Les phases du déplacement du bras 16 entraîné par cet amplificateur sont représentées en figure 14.

La figure 20 représente un amplificateur angulaire selon une variante d'exécution, il est constitué d'une bielle fixe 49 articulée en rotation au châssis, non représenté, sur laquelle est articulée une bielle 50 qui parcourt une ellipse, au niveau de son articulation au bras 16. Les phases du déplacement du bras 16 entraîné par cet amplificateur sont représentées en figure 14.

Les modes de réalisation décrits ne sont que des exemples et ne limitent pas l'invention qui peut être réalisée suivant d'autres variantes.

## Revendications

1. Véhicule porteur comprenant un plateau de chargement (4) constitué d'un bâti (3) inclinable par rapport au châssis support (2), et d'une plate-forme (7) télescopique par rapport audit bâti inclinable (3), le plateau de chargement (4) comportant un équipement de tractage/levage articulé sur la partie arrière, caractérisé en ce que la plate-forme (7), capable de coulisser sur le bâti (3) est articulée à son extrémité en rotation sur un coulisseau (9), de manière à permettre un angle d'inclinaison faible par rapport au sol, en position d'extrémité basse et en ce que le dispositif de tractage/levage (15) est escamotable et se range entièrement sous le plateau (4) dans une position qui lui permet de former un dispositif anti-encastrement.

2. Véhicule selon la revendication 1, caractérisé en ce que la plate-forme (7) est guidée et déplacée sur le bâti (3) au moyen d'au moins une crémaillère (10) et d'au moins un pignon (11).

3. Véhicule selon la revendication 2, caractérisé en ce que le pignon (11) et la plate-forme (7) sont déplacés sur la crémaillères (10) au moyen d'au moins un moteur hydraulique (12).

4. Véhicule selon la revendication 2, caractérisé en ce que le pignon (11) et la plate-forme (7) sont maintenus immobiles à n'importe quelle position, au moyen d'au moins un frein hydraulique (13) par manque de pression.

5. Véhicule selon la revendication 1, caractérisé en ce que l'équipement de tractage/levage articulé (15) comprend au moins un bras (16) et un panier (17) articulés sur le bras (16) au moyen d'un arbre (18) et en ce que le panier (17) se replie, de façon à être parallèle au bras (16) en position rangée de l'équipement de tractage/levage (15) et est également parallèle au plateau (4), et en ce qu'en position rangée, le pla teau (4) et l'arbre (13) se terminent tous les deux au même niveau l'un au-dessus de l'autre et en ce qu'en position de grue, l'équipement de tractage/levage (15) est déployé à un angle d'au moins 45° par rapport au sol, à l'arrière du véhicule, au-delà du plateau (4) et en position de remorquage, l'équipement de tractage/levage (15) est réglable à une hauteur modulable sans modifier son assiette.

6. Véhicule porteur selon la revendication 5, caractérisé en ce que l'équipement de tractage/levage (15) comprend un amplificateur angulaire (23) hydraulique ou mécanique ou à came.

7. Véhicule porteur selon l'une quelconque des revendications 5 à 6, caractérisé en ce que l'équipement de tractage/levage (15) est articulé au moyen d'au moins deux bielles (28,29) entraînées par au moins deux vérins (30, 31) dont l'un est tourillonné sur une troisième bielle (27).

8. Véhicule porteur selon la revendication 6, caractérisé en ce que l'amplificateur angulaire (23) de l'équipement de tractage/levage (15) est constitué d'au moins une crémaillère (36) et d'au moins un pignon (37).

9. Véhicule porteur selon la revendication 7, caractérisé en ce que l'amplificateur angulaire (23) de l'équipement de tractage/levage (15) est constitué d'au moins un pignon (34) et d'au moins un satellite (35).

10. Véhicule porteur selon la revendication 6, caractérisé en ce que l'amplificateur angulaire (23) de l'équipement de tractage/levage (15) est constitué d'un compas (38).

11. Véhicule porteur selon la revendication 6, caractérisé en ce que l'amplificateur angulaire (23) de l'équipement de tractage/levage (15) étant constitué d'une bielle (40) en forme de crochet articulé à une extrémité à un vérin (41) et en ce qu'il est articulé à l'autre extrémité à une bielle (42) rectiligne, cette dernière étant articulée sur le bras (16) du dispositif de levage.

12. Véhicule porteur selon la revendication 7, caractérisé en ce qu'une bielle (45) des deux bielles de l'amplificateur angulaire (23) est rétractable au moyen d'une lumière (43) au niveau de l'articulation et une autre bielle (44) est munie également d'une lumière (46) au niveau de l'articulation et est de forme à arrêter un crochet (48) qui oblige les bielles à coulisser le long de la lumière.

13. Véhicule porteur selon la revendication 12, caractérisé en ce qu'une articulation de l'amplificateur angulaire (23) reste fixe par rapport au châssis et en ce qu'elle est libre en rotation et en ce que l'autre articulation parcourt pour une bielle (50) un cercle et pour l'arbre (16) une ellipse.

## Patentansprüche

1. Trägerfahrzeug mit einer Ladefläche (4), bestehend aus einem gegenüber dem Hauptrahmen (2) neigbaren Rahmen (3) und einer gegenüber dem neigbaren Rahmen (3) teleskopierbaren Plattform (7), wobei die Ladefläche (4) eine im hinteren Bereich schwenkbar angeordnete Zug-/Hubeinrichtung aufweist, dadurch gekennzeichnet, daß die auf dem Rahmen (3) geführte Plattform (7) an ihrem Ende auf einem Schlitten (9) drehbar gelagert ist derart, daß in der abgesenkten Endlage ein kleiner Neigungswinkel gegenüber dem Bodenniveau erreichbar ist, und daß die Zug-/Hubeinrichtung (15) einziehbar ist und sich vollständig unterhalb der Ladefläche (4) in einer Position befindet, in der sie einen als Unterfahrschutz wirkenden Heckabweiser bildet.

2. Fahrzeug nach Anspruch 1, dadurch gekennzeichnet, daß die Plattform (7) mittels mindestens einer Zahnstange (10) und mindestens eines Ritzels (11) auf dem Rahmen (3) geführt und verlagerbar ist.

3. Fahrzeug nach Anspruch 2, dadurch gekennzeichnet, daß das Ritzel (11) und die Plattform (7) mittels mindestens eines Hydraulikmotors (12) auf der Zahnstange (10) verlagerbar sind.

4. Fahrzeug nach Anspruch 2, dadurch gekennzeichnet, daß das Ritzel (11) und die Plattform (7) in jeder beliebigen Stellung mittels wenigstens einer Hydraulikbremse bei Druckausfall festsetzbar sind.

5. Fahrzeug nach Anspruch 2, dadurch gekennzeichnet, daß die schwenkbare Zug-/Hubeinrichtung (15) wenigstens einen Arm (16) und eine an dem Arm (16) mittels einer Achse (18) schwenkbare Auffahrschwelle (17) aufweist, und daß die Auffahrschwelle (17) derart einklappbar ist, daß sie in der Ruhestellung der Zug-/Hubeinrichtung (15) parallel zu dem Arm (16) und zugleich parallel zur Ladefläche (4) verläuft, und daß in der Ruhestellung die Ladefläche (4) und die Achse (18) auf gleichem Niveau übereinander enden und daß in der Kranauslegerstellung die Zug-/Hubeinrichtung (15) am Heck des Fahrzeugs unter einem Winkel von mindestens 45° bezüglich des Bodenniveaus über die Ladefläche (4) hinaus aufgestellt ist und in der Abschleppstellung die Zug-/Hubeinrichtung (15) auf veränderbarer Höhe ohne Änderung ihres Lagersitzes einstellbar ist.

6. Fahrzeug nach Anspruch 5, dadurch gekennzeichnet, daß die Zug-/Hubeinrichtung (15) einen hydraulisch, mechanisch oder kurvengesteuerten Winkelumsetzer (23) aufweist.

7. Fahrzeug nach Anspruch 5 oder 6, dadurch gekennzeichnet, daß die Zug-/Hubeinrichtung (15) mittels wenigstens zwei Lenkern (28,29) schwenkbar ist, die von mindestens zwei Stellantrieben (30,31) angetrieben sind, von denen einer auf einem dritten Lenker (27) drehbar gelagert ist.

8. Fahrzeug nach Anspruch 6, dadurch gekennzeichnet, daß der Winkelumsetzer (23) der Zug-/Hubeinrichtung (15) von wenigstens einer Zahnstange (36) und wenigstens einem Ritzel (37) gebildet ist.

9. Fahrzeug nach Anspruch 7, dadurch gekennzeichnet, daß der Winkelumsetzer (23) der Zug-/Hubeinrichtung (15) von wenigstens einem Ritzel (34) und wenigstens einem Satellitenrand (35) gebildet ist.

10. Fahrzeug nach Anspruch 6, dadurch gekennzeichnet, daß der Winkelumsetzer (23) der Zug-/Hubeinrichtung von einer Schere (38) gebildet ist.

11. Fahrzeug nach Anspruch 6, dadurch gekennzeichnet, daß der Winkelumsetzer (23) der Zug-/Hubeinrichtung als hakenförmiger Lenker (40) ausgebildet ist, der an einem Ende an einem Stellantrieb (41), am anderen Ende an einem geraden Lenker gelagert ist, der seinerseits an dem Arm (16) der Zug-/Hubeinrichtung gelagert ist.

12. Fahrzeug nach Anspruch 7, dadurch gekennzeichnet, daß ein Lenker (45) der beiden Lenker des Winkelumsetzers (23) mittels eines Langlochs (43) auf dem Niveau des Gelenks einziehbar ist und ein anderer Hebel (44) gleichfalls mit einem Langloch (46) auf dem Niveau des Gelenks versehen ist und in der Lage ist, einen die Lenker entlang den Langlöchern in eine Gleitbewegung zwingenden Haken zu arretieren.

13. Fahrzeug nach Anspruch 12, dadurch gekennzeichnet, daß ein Gelenk des Winkelumsetzers (23) bezüglich des Hauptrahmens ortsfest und frei drehbar ist, und daß das andere Gelenk für einen Hebel (50) eine Kreisbahn und für den Arm (16) eine Ellipsenbahn beschreibt.

## Claims

1. Transporter vehicle comprising a loading platform (4) consisting of a frame (3), which can be inclined with respect to the support chassis (2), and a deck (7) which is telescopic relative to the said inclinable frame (3), the loading platform (4) comprising traction/lifting equipment articulated on the rear section, characterised in that the deck (7), which can slide on the frame (3), is articulated at its end rotating on a sliding block (9), so as to permit a low angle of inclination relative to the ground, in the lowered position of the end; and in that the traction/lifting device (15) can be retracted and is stored completely under the platform (4) in a position which enables it to form an anti-embedding device.

2. Vehicle according to Claim 1,
characterised in that the deck (7) is guided and displaced on the frame (3) by means of at least one rack (10) and at least one pinion (11).

3. Vehicle according to Claim 2,
characterised in that the pinion (11) and the deck (7) are displaced on the racks (10) by means of at least one hydraulic motor (12).

4. Vehicle according to Claim 2,
characterised in that the pinion (11) and the deck (7) are held immobile in any position by means of at least one hydraulic brake (13) operating by lack of pressure.

5. Vehicle according to Claim 1,
characterised in that the articulated traction/lifting equipment (15) comprises at least one arm (16) and a cage (17) articulated on the arm (16) by means of a shaft (18); and in that the cage (17) folds up so as to be parallel to the arm (16) in the stored position of the traction/lifting equipment (15) and is likewise parallel to the platform (4); and in that, in the stored position, the platform (4) and the shaft (13) both terminate at the same level one above the other; and in that, in the crane position, the traction/lifting equipment (15) is opened out at an angle of at least 45° relative to the ground, at the rear of the vehicle, beyond the platform (4) and, in the towing position, the traction/lifting equipment (15) can be adjusted to an adjustable height without its stable position having to be altered.

6. Transporter vehicle according to Claim 5, characterised in that the traction/lifting equipment (15) comprises a hydraulic, mechanical or cam-operated angular amplifier (23).

7. Transporter vehicle according to either of Claims 5 and 6, characterised in that the traction/lifting equipment (15) is articulated by at least two connecting rods (28, 29) driven by at least two jacks (30, 31) of which one is pivoted on a third connecting rod (27).

8. Transporter vehicle according to Claim 6, characterised in that the angular amplifier (23) for the traction/lifting equipment (15) consists of at least one rack (36) and at least one pinion (37).

9. Transporter vehicle according to Claim 7, characterised in that the angular amplifier (23) for the traction/lifting equipment (15) consists of at least one pinion (34) and at least one planet wheel (35).

10. Transporter vehicle according to Claim 6, characterised in that the angular amplifier (23) for the traction/lifting equipment (15) consists of a stay (38).

11. Transporter vehicle according to Claim 6, characterised in that the angular amplifier (23) for the traction/lifting equipment (15) consists of a connecting rod (40) in the form of a hook articulated at one end to a jack (41); and in that it is articulated at the other end to a rectilinear connecting rod (42), the latter being articulated on the arm (16) of the lifting device.

12. Transporter vehicle according to Claim 7, characterised in that one (45) of the two connecting rods of the angular amplifier (23) can be retracted by means of an elongate hole (43) at the articulation and a further connecting rod (44) is also provided with an elongate hole (46) at the articulation and is of a shape such that it can stop a hook (48) which forces the connecting rods to slide along the elongate hole.

13. Transporter vehicle according to Claim 12, characterised in that an articulation of the angular amplifier (23) remains fixed relative to the chassis; in that it is free to rotate; and in that the other articulation describes a circle for the connecting rod (50) and an ellipse for the shaft (16).
